# EUROPÄISCHE PATENTSCHRIFT

(11) **EP 0 508 422 B1**
(45) Veröffentlichungstag und Bekanntmachung des Hinweises auf die Patenterteilung: **25.01.1995**
(21) Anmeldenummer: 92106102.4
(22) Anmeldetag: 09.04.1992
(51) Int. Cl.: B29C 47/50, B29B 17/00, B29C 45/18

(54) **Verfahren und Vorrichtung zum Verarbeiten von Kunststoffen**
Method and apparatus for treatment of plastic materials
Procédé et dispositif de traitement des matières plastiques

(30) Priorität: 11.04.1991 DE 4111751; 05.03.1992 DE 4207015
(43) Veröffentlichungstag der Anmeldung: 14.10.1992
(73) Patentinhaber: Krauss-Maffei Aktiengesellschaft, 80997 München (DE)
(72) Erfinder: Zweig, Konrad, Dipl.-Wirtsching, W-8900 Augsburg (DE); Bürkle, Erwin, Dr. Dipl.-Ing., W-8177 Bichl (DE); Spötzl, Markus, Dipl.-Ing. (FH), W-8000 München 71 (DE); Karlinger, Peter, Dipl.-Ing., W-8900 Augsburg (DE)

(56) Entgegenhaltungen:
- DD-A- 231 029
- DE-A- 2 940 356
- US-A- 4 591 467
- KUNSTSTOFFE Bd. 80, Nr. 6, Juni 1990, MüNCHEN, DE Seiten 673 - 678; F. HENSEN UND W. IMPING: 'Kaskaden-Extrusionssysteme verbessern den Extrusionsprozess'
- PATENT ABSTRACTS OF JAPAN vol. 14, no. 46 (M-926)(3989) 26. Januar 1990 & JP-A-1 275 015 (ISHIKAWAJIMA HARIMA HEAVY IND CO LTD) 2. November 1989

## Beschreibung

Die Erfindung bezieht sich auf ein Verfahren und eine Vorrichtung zum Verarbeiten von Kunststoffen durch Spritzgießen gemäß den Oberbegriffen der Ansprüche 1 und 7.

Nach der Patentschrift DD 231 029 A1, von welcher der Oberbegriff des Anspruchs 1 ausgeht, ist ein Verfahren und eine Einrichtung zum Compoundieren von Thermoplasten, insbesondere Thermoplastabfällen auf Extrusionsmaschinen bekannt. Dabei wird mittels eines Kaskaden-Extrudersystems in einer ersten Stufe das Thermoplastmaterial gefiltert und in einer zweiten Stufe die Schnecke compoundiert und einer Nachentgasung unterzogen. Es handelt sich dabei um ein Extrusionsverfahren zum Herstellen von Mischgranulat aus Primär- und Sekundärmatereial , d.h. um ein kontinuierlich ablaufendes Verfahren. Demgegenüber ist das Spritzgießen ein zyklisches Verfahren.

Neben der Verarbeitung von sortenreinem Rohmaterial für Kunststoffe, wie z.B. reines Polyamid, Polycarbonat oder Polypropylen, ist es bekannt, auch ungereinigte Kunststoffe, welche Schmutz- und/oder Lackpartikel enthalten, zu regenerieren bzw. zu reinigen und wiederzuverarbeiten. Der regenerierte Kunststoff fällt nach dem Aufschmelzen und Reinigen in der Regel als Sekundärgranulat an, welches für die Wiederverarbeitung entweder allein oder zusammen mit Primärgranulat erneut aufgeschmolzen wird. Bei wiederholtem Schmelzen von Kunststoffen findet aber ein unerwünschter, mehrfacher Abbau der physikalischen Eigenschaften des Materials statt.

Der Erfindung liegt daher die Aufgabe zugrunde, bei der Wiederverarbeitung von ungereinigten Kunststoffen die Schmelzvorgänge zu reduzieren und die Austragsleistung zu erhöhen.

Gemäß der Erfindung wird diese Aufgabe dadurch gelöst, daß der ersten, aus Neumaterial bzw. Primärgranulat bestehenden, Kunststoffschmelze eine zweite oder weitere Schmelzen aus ungereinigtem, regenerierbarem Kunststoff nach einem Reinigungsvorgang direkt zugeführt werden, wobei die gereinigten Schmelzen gespeichert werden, bevor sie der ersten Schmelze zugeführt werden. Die Speicherung der gereinigten Schmelze ermöglicht einen kontinuierlichen Betrieb, z.B. mittels eines Schmelzespeichers, welcher der Plastifiziervorrichtung für das Primärgranulat vorgeschaltet ist. Hierdurch können Anfahrdruckstöße vermieden werden. Der ungereinigte Kunststoff kann unmittelbar nach seiner Reinigung als Schmelze, d.h. ohne zwischenzeitliches Abkühlen und Wiederaufschmelzen, zusammen mit der ersten Schmelze wiederverarbeitet werden.

Die Reinigung erfolgt vorteilhaft mechanisch mittels Filter und/oder Trennkopf bzw. Sieb. Bei der Verarbeitung von ungereinigten Kunststoffen, welche z.B. Lackpartikel enthalten, wird die ungereinigte Schmelze vorteilhaft entgast. Außerdem wird die Schmelze durch den Einsatz eines Filters weniger beansprucht, da der gesamte Zyklus zum Filtern der Schmelze zur Verfügung steht

Das erfindungsgemäße Verfahren ermöglicht in vorteilhafter Weise, daß die gereinigte Schmelze entweder einen Kern innerhalb der ersten Schmelze oder aber einen Mantel um die erste Schmelze bildet. Hierdurch ist eine Mehrkomponententechnik möglich, d.h. je nach Qualitätsanspruch kann das Kunststoffregenerat aus der gereinigten Schmelze außen oder innen sein.

Die Entgasung am bzw. nach dem Zusammenfluß beider Schmelzen ist in vorteilhafter Weise einfach und sicher durch Einschalten einer Entgasungseinrichtung zu realisieren.

In vorteilhafter Weise erfolgt die Einspeisung der Schmelze in die Plastifiziereinrichtung im Bereich der Schneckenmisch- oder - einzugszone. Ein Vorteil dieser Anordnung ist eine geringere Belastung der Schmelze bei großen Plastifizierleistungen. Bei einer Zuführung der Schmelze in die Mischzone können außerdem über die Einzugszone der Plastifiziereinrichtung Füll- und Verstärkungsstoffe sowie Neuware hinzugegeben werden. Durch diese vorteilhafte Anordnung ist eine sehr gute Mischung der Zugaben mit der gereinigten Schmelze möglich.

Vorteilhaft werden als Plastifizierungseinrichtungen Extrudersysteme und/oder Spritzgießplastifiziereinheiten verwendet, wobei die Plastifiziereinheiten für die Mehrkomponententechnik auch mit konzentrischen Spritzdüsen versehen sein können. In einem Zweikomponentenkopf werden dabei die gereinigten Schmelzen mit der ersten bzw. der Primärschmelze zusammengeführt.

Um im ungereinigten Kunststoff enthaltene Metallteile zu entfernen, wird in vorteilhafter Weise ein vorgeschaltetes Magnetfilter benutzt.

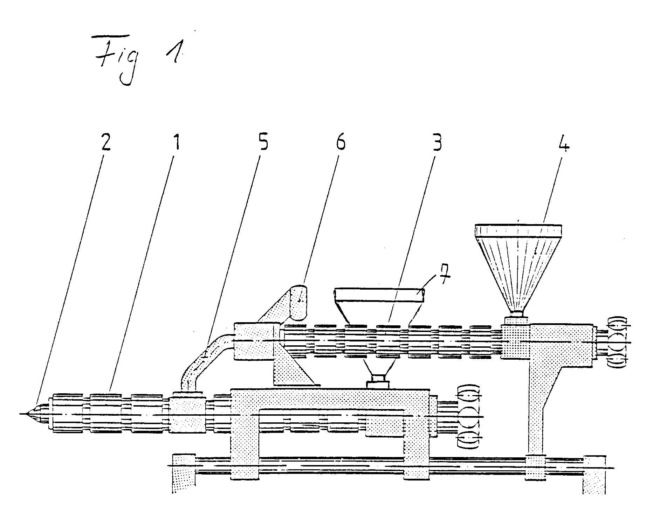

Ausführungsbeispiele der Erfindung sind in der Zeichnung, Fig. 1 bis 7 schematisch dargestellt.

Gemäß Fig. 1 ist eine Plastifiziereinrichtung 1 für das Spritzgießen von Kunststoff mit einer Spritzdüse 2 und einem Trichter 7 für die Zufuhr von Neuware bzw. Primärgranulat versehen. Über der Plastifiziereinheit 1 ist eine weitere Plastifiziereinrichtung 3 vorgesehen, die im wesentlichen aus einem Extrudersystem besteht. Dieses ist mit einem Trichter 4 für das Einfüllen von ungereinigtem Kunststoffregranulat und mit einer Zuführung 5 für das Zuführen des gereinigten Kunststoffs in die Plastifiziereinrichtung 1 versehen. Der Plastifiziereinrichtung 3 sind ferner ein Filter 6 sowie eine nicht dargestellte Entgasungseinrichtung zugeordnet.

Fig. 2 zeigt eine Plastifiziereinrichtung 8 für Primärgranulat als Bestandteil einer Spritzgießeinheit 9 mit einem Trichter 10, einer Entgasungseinrichtung 11 , und einer Formschließeinheit 12. Eine zweite Plastifiziereinrichtung 13 dient als Extrudereinheit zur Schmelzeaufbereitung von ungereinigtem Material, welches mittels eines Trichters 14 eingefüllt wird. Über eine Rohrleitung 15 wird die Schmelze zur Reinigung durch ein Filter 16 der Plastifiziereinrichtung 8 zugeführt, wobei die so vereinigten Schmelzen über die Entgasungsvorrichtung 11 entgast werden.

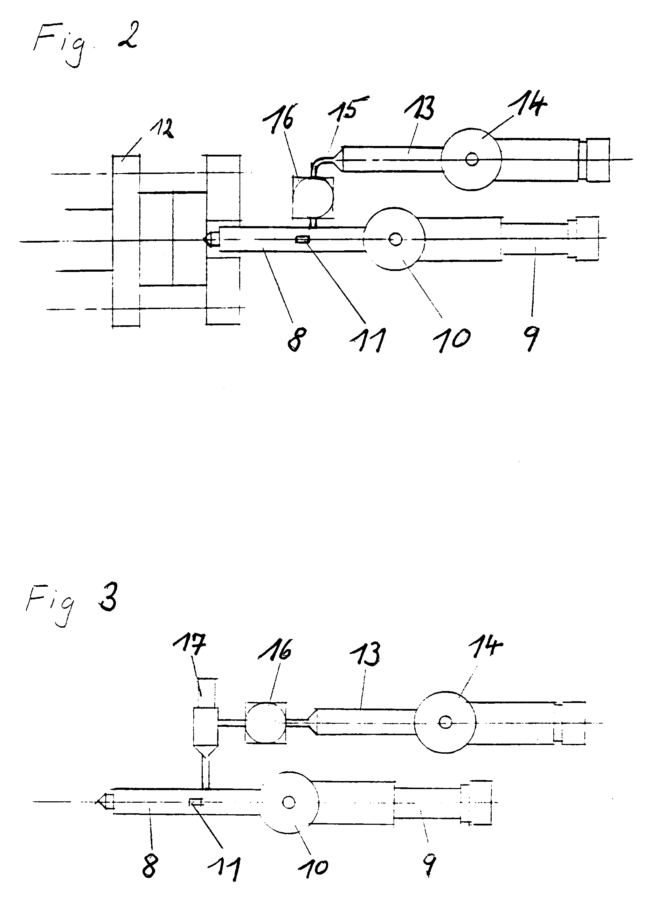

Fig. 3 entspricht Fig. 2, jedoch ist hier zwischen dem Filter 16 und der Plastifiziereinrichtung 8 ein Schmelzespeicher 17 angeordnet.

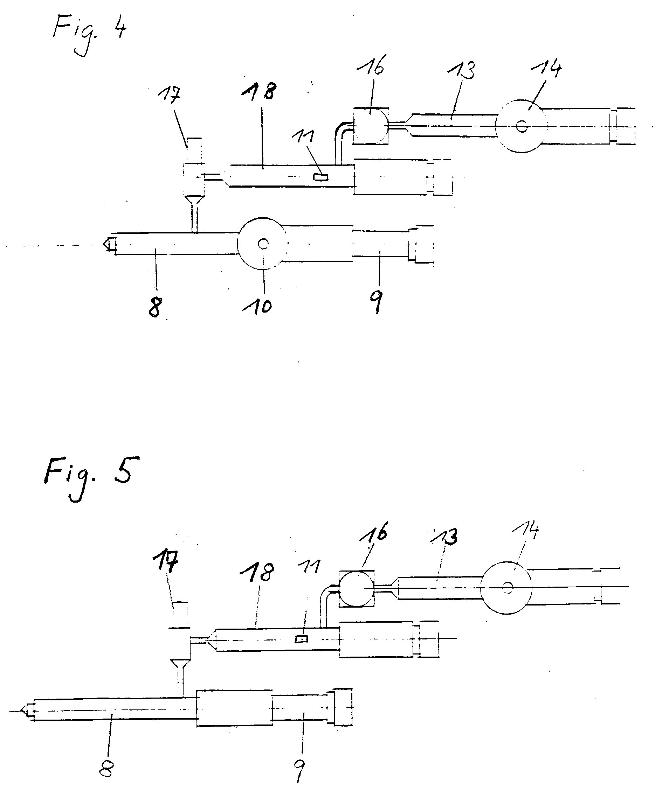

Gemäß Fig. 4 ist der Plastifiziereinrichtung 13 und dem Filter 16 eine weitere Plastifiziereinrichtung 18 mit einer Entgasungseinrichtung 11 als Entgasungseinheit nachgeschaltet, aus der die gereinigte und entgaste Sekundärschmelze über den Schmelzespeicher 17 der Primärschmelze zugeführt wird, und zwar im Bereich der Schneckenmischzone der Plastifiziereinrichtung 8.

Fig. 5 entspricht Fig. 4 mit dem Unterschied, daß die Sekundärschmelze statt in die Schneckenmischzone in die Schneckeneinzugszone der Plastifiziereinrichtung 8 eingespeist wird.

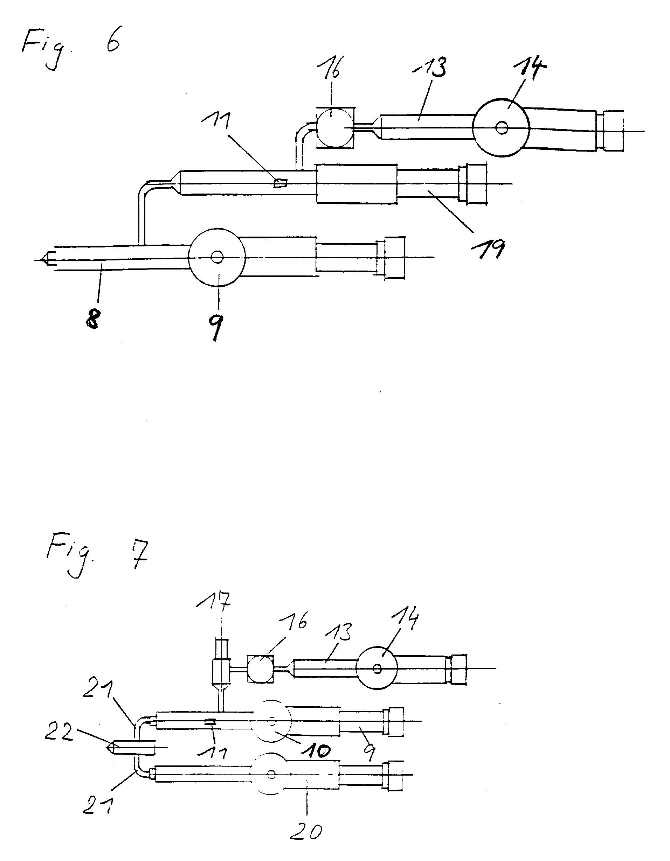

Gemäß Fig. 6 ist zwischen den beiden Plastifiziereinrichtungen 13 und 8 eine Spritzgießeinheit 19 mit einer Entgasungseinrichtung 11 als Schmelzespeicher eingeschaltet.

Fig. 7 zeigt ein Zweikomponentensystem, welches von einer Vorrichtung gemäß Fig. 3 ausgeht. Zusätzlich zur Plastifiziereinrichtung 8 ist eine weitere Plastifiziereinrichtung 20 angeordnet, die beide über eine Leitung 21 einen Zweikomponentenspritzkopf 22 mit Schmelze beschicken, so daß die gereinigte Schmelze entweder einen Kern innerhalb der Primärschmelze oder einen Mantel um die Primärschmelze bildet.

## Patentansprüche

1. Verfahren zum Verarbeiten von Kunststoffen bei dem eine erste, aus Neumaterial bzw. Primärgranulat bestehende, Kunststoffschmelze zusammen mit regeneriertem, wiederverarbeitbarem Kunststoff verarbeitet wird, **dadurch gekennzeichnet**, daß vor einem anschließenden Spritzgießen der ersten Kunststoffschmelze eine zweite oder weitere Schmelzen aus ungereinigtem, regenerierbarem Kunststoff nach einem Reinigungsvorgang direkt zugeführt werden, wobei die gereinigten Schmelzen gespeichert werden, bevor sie der ersten Schmelze zugeführt werden.

2. Verfahren nach Anspruch 1, **dadurch gekennzeichnet**, daß die ungereinigte Kunststoffschmelze mechanisch gereinigt wird.

3. Verfahren nach Anspruch 1 oder 2, **dadurch gekennzeichnet**, daß die ungereinigte Schmelze entgast wird.

4. Verfahren nach Anspruch 1 oder 2, **dadurch gekennzeichnet**, daß nach dem Zuführen der gereinigten Schmelzen in die erste Schmelze die so vereinigten Schmelzen entgast werden.

5. Verfahren nach den Ansprüchen 1 bis 4 oder einem derselben, **dadurch gekennzeichnet**, daß die gereinigte Schmelze einen Kern innerhalb der ersten Schmelze bildet.

6. Verfahren nach den Ansprüchen 1 bis 4 oder einem derselben, **dadurch gekennzeichnet**, daß die gereinigte Schmelze einen Mantel um die erste Schmelze bildet.

7. Vorrichtung zur Durchführung des Verfahrens nach den Ansprüchen 1 bis 7, **dadurch gekennzeichnet**, daß eine Plastifiziereinrichtung (3,13) mit einem Einfülltrichter (4,14) für den ungereinigten, regenerierbaren Kunststoff und einem nachgeschaltetem Filter (6,16) für mechanische Verunreinigungen sowie einer Zuführung (5,15) für den gereinigten Kunststoff in eine Plastifiziereinrichtung (1,8) für die erste Schmelze und die Plastifiziereinrichtung mit einer eingebauten und/oder vorgeschalteten Entgasungseinrichtung (11)versehen ist, wobei der Plastifiziereinrichtung (1,8) für das Primärgranulat ein Schmelzespeicher (17) vorgeschaltet ist.

8. Vorrichtung nach Anspruch 7, **dadurch gekennzeichnet**, daß zwischen der Plastifiziereinrichtung (3,13) für den ungereinigten Kunststoff und der Plastifiziereinrichtung (1,8) für das Primärgranulat eine weitere Plastifiziereinrichtung (18) mit einer Entgasungseinrichtung (11) als Entgasungseinheit eingeschaltet ist.

9. Vorrichtung nach Anspruch 8, **dadurch gekennzeichnet**, daß die Entgasungseinheit ein Extrudersystem mit einer Entgasung ist.

10. Vorrichtung nach Anspruch 9, **dadurch gekennzeichnet**, daß der Schmelzespeicher (17) als Entgasungseinheit ausgebildet ist.

11. Vorrichtung nach Anspruch 8, **dadurch gekennzeichnet**, daß eine Spritzgießeinheit (19) als Schmelzespeicher ausgebildet ist.

12. Vorrichtung nach den Ansprüchen 7 bis 11 oder einem derselben, **dadurch gekennzeichnet**, daß die Schmelzeeinführung im Bereich der Schneckenmischzone der Plastifiziereinrichtung (1,8) vorgesehen ist.

13. Vorrichtung nach den Ansprüchen 7 bis 11 oder einem derselben, **dadurch gekennzeichnet**, daß die Schmelzeeinführung im Bereich der Schneckeneinzugszone der Plastifiziereinrichtung (1,8) vorgesehen ist.

14. Vorrichtung nach Anspruch 7, **dadurch gekennzeichnet**, daß zu der Plastifiziereinrichtung (1,8) eine weitere Plastifiziereinrichtung (20) für Erstgranulat parallel geschaltet ist, derart, daß beide Einrichtungen über eine Leitung (21) einen gemeinsamen Zweikomponentenspritzkopf (22) mit Schmelze beschicken.

## Claims

1. Method for processing synthetic materials, in which a first molten synthetic material consisting of new material or primary granulated material is processed together with regenerated synthetic material which can be reprocessed, characterised in that before subsequent injection moulding, a second or further molten material of unpurified synthetic material, which can be regenerated, is supplied directly to the first molten synthetic material after a purification operation, the purified molten materials being stored before they are supplied to the first molten material.

2. Method according to Claim 1, characterised in that the unpurified molten synthetic material is purified mechanically.

3. Method according to Claim 1 or 2, characterised in that gas is removed from the unpurified molten material.

4. Method according to Claim 1 or 2, characterised in that after supplying the purified molten materials to the first molten material, gas is removed from the molten materials combined in this way.

5. Method according to Claims 1 to 4 or one of same, characterised in that the purified molten material forms a core within the first molten material.

6. Method according to Claims 1 to 4 or one of same, characterised in that the purified molten material forms a sheath around the first molten material.

7. Apparatus for carrying out the method according to Claims 1 to 7, characterised in that a plasticizing device (3, 13) is provided with a filling funnel (4, 14) for the unpurified synthetic material, which can be regenerated, and a subsequent filter (6, 16) for mechanical impurities as well as a supply arrangement (5, 15) for the purified synthetic material to a plasticizing device (1, 8) for the first molten material and the plasticizing device is provided with an incorporated and/or preceding gas-removal device (11), a molten material store (17) preceding the plasticizing device (1, 8) for the primary granulated material.

8. Apparatus according to Claim 7, characterised in that inserted between the plasticizing device (3, 13) for the unpurified synthetic material and the plasticizing device (1, 8) for the primary granulated material is a further plasticizing device (18) with a gas-removal device (11) as the gas-removal unit.

9. Apparatus according to Claim 8, characterised in that the gas-removal unit is an extruder system with gas removal.

10. Apparatus according to Claim 9, characterised in that the molten material store (17) is constructed as a gas-removal unit.

11. Apparatus according to Claim 8, characterised in that an injection moulding unit (19) is constructed as a molten material store.

12. Apparatus according to Claims 7 to 11 or one of same, characterised in that the introduction of the molten material is provided in the region of the worm mixing zone of the plasticizing device (1, 8).

13. Apparatus according to Claims 7 to 11 or one of same, characterised in that the introduction of molten material is provided in the region of the worm feed zone of the plasticizing device (1, 8).

14. Apparatus according to Claim 7, characterised in that connected in parallel with the plasticizing device (1, 8) is a further plasticizing device (20) for primary granulated material so that both devices supply molten material by way of a pipe (21) to a common two-component injection head (22).

## Revendications

1. Procédé de transformation des matières plastiques, dans lequel une première matière plastique fondue, constituée de matériau neuf, ou granulé primaire, est mise en oeuvre en même temps que de la matière plastique régénérée, susceptible d'être à nouveau transformée, caractérisé en ce qu'avant un moulage subséquent par injection, une deuxième matière fondue, ou d'autres matières fondues provenant de matière plastique souillée susceptible d'être régénérée, sont amenées directement après une opération de purification dans la première matière plastique fondue, les matières fondues purifiées étant stockées avant d'être amenées dans la première matière fondue.

2. Procédé selon la revendication 1, caractérisé en ce que la matière plastique fondue souillée est purifiée mécaniquement.

3. Procédé selon la revendication 1 ou 2, caractérisé en ce que la matière fondue souillée est dégazée.

4. Procédé selon la revendication 1 ou 2, caractérisé en ce que les matières fondues purifiées ayant été amenées dans la première matière fondue, les matières fondues ainsi groupées sont dégazées.

5. Procédé selon les revendications 1 à 4 ou selon l'une de celles-ci, caractérisé en ce que la matière plastique fondue et purifiée forme une âme à l'intérieur de la première matière fondue.

6. Procédé selon les revendications 1 à 4 ou selon l'une de celles-ci, caractérisé en ce que la matière fondue purifiée forme une enveloppe autour de la première matière fondue.

7. Dispositif pour l'exécution du procédé selon les revendications 1 à 7, caractérisé en ce qu'un dispositif (3, 13) de plastification est muni d'une trémie (4,14) de remplissage par la matière plastique souillée susceptible d'être régénérée, et d'un filtre (6, 16) monté en aval destiné à la purification mécanique, ainsi que d'un dispositif (5, 15) pour l'alimentation en matière plastique purifiée, d'un dispositif de plastification (1, 8) destiné à la première matière fondue et du dispositif de plastification comportant un dispositif de dégazage incorporé et/ou monté en amont, un dispositif (17) de stockage de matière fondue étant monté en amont du dispositif de plastification (1, 8) destiné au granulé primaire.

8. Dispositif selon la revendication 7, caractérisé en ce qu'entre le dispositif (3, 13) de plastification de la matière plastique souillée et le dispositif (1, 8) de plastification du granulé primaire, un autre dispositif de plastification (1, 8) comportant un dispositif de dégazage (11), est monté en tant qu'unité de dégazage.

9. Dispositif selon la revendication 8, caractérisé en ce que l'unité de dégazage est un système d'extrusion comportant un élément de dégazage.

10. Dispositif selon la revendication 9, caractérisé en ce que le dispositif (17) de stockage de matière fondue est conformé en unité de dégazage.

11. Dispositif selon la revendication 8, caractérisé en ce qu'une unité (19) de moulage par injection est conformée en dispositif de stockage de matière fondue.

12. Dispositif selon les revendications 7 à 11, ou selon l'une de celles-ci, caractérisé en ce que l'introduction de la matière fondue est prévue dans la zone de mélangeage de la vis du dispositif de plastification (1, 8).

13. Dispositif selon les revendications 7 à 11, ou selon l'une de celles-ci, caractérisé en ce que l'introduction de la matière fondue est prévue dans la zone d'entrée de la vis du dispositif de plastification (1, 8).

14. Dispositif selon la revendication 7, caractérisé en ce qu'un autre dispositif de plastification (20), destiné au premier granulat, est monté en parallèle par rapport au dispositif de plastification (1, 8) de façon telle que, par l'intermédiaire d'un conduit (21), les deux dispositifs alimentent en matière fondue une tête (22) commune pour le moulage par injection de deux composants.
